(19) Europäisches Patentamt

European Patent Office

Office européen des brevets

(11) Veröffentlichungsnummer: **0 261 396 B1**

# (12) EUROPÄISCHE PATENTSCHRIFT

(45) Veröffentlichungstag der Patentschrift: **15.04.92**

(21) Anmeldenummer: **87112078.8**

(22) Anmeldetag: **20.08.87**

(51) Int. Cl.⁵: **C08L 51/04**, C08F 285/00, C08L 55/02, C08L 25/12

(54) Thermoplastische Formmasse auf Basis von ABS.

(30) Priorität: **27.08.86 DE 3629152**

(43) Veröffentlichungstag der Anmeldung:
**30.03.88 Patentblatt  88/13**

(45) Bekanntmachung des Hinweises auf die
Patenterteilung:
**15.04.92 Patentblatt  92/16**

(84) Benannte Vertragsstaaten:
**BE DE FR GB NL**

(56) Entgegenhaltungen:
**DE-A- 2 420 357**

(73) Patentinhaber: **BASF Aktiengesellschaft
Carl-Bosch-Strasse 38
W-6700 Ludwigshafen(DE)**

(72) Erfinder: **Mitulla, Konrad, Dr.
Schwalbenweg 31
W-6700 Ludwigshafen(DE)**
Erfinder: **Ostermayer, Bertram, Dr.
Pfaffenpfad 14
W-6701 Roedersheim-Gronau(DE)**
Erfinder: **Seiler, Erhard, Dr.
Erpolzheimer Strasse 1
6700 Ludwigshafen(DE)**
Erfinder: **Schmitt, Burghard, Prof. Dr.
Braeunigstrasse 12
W-6520 Worms 24(DE)**
Erfinder: **Hambrecht, Juergen, Dr.
Am Klosterwald 31
W-4400 Muenster-Hiltrup(DE)**
Erfinder: **Siebel, Hans Peter, Dr.
Trifelsring 20
W-6703 Limburgerhof(DE)**

EP 0 261 396 B1

**Beschreibung**

Die Erfindung betrifft eine thermoplastische Formmasse, die ein grobteiliges Pfropfmischpolymerisat (mittlere Teilchengröße 0,2 bis 1 $\mu$m) und ein feinteiliges Pfropfmischpolymerisat (mittlere Teilchengröße 0,05 - 0,15 $\mu$m) jeweils auf Basis von ABS und ein Styrol enthaltendes Copolymerisat als Hartmatrix aufweist.

Zum Stand der Technik nennen wir

(1) DE-OS 24 20 357

(2) DE-OS 24 20 358

(3) US-P 3 509 237 und

(4) US-P 3 652 721

In (1) bis (4) werden schlagzähmodifizierte Styrol und Acrylnitril enthaltende Copolymerisate beschrieben, die zwei verschieden gepfropfte, eine grobteilige und eine feinteilige, Kautschukdispersionen enthalten. In (1) und (2) werden die grobteiligen und feinteiligen Dispersionen unterschiedlich gepfropft. Die Produkte besitzen befriedigende Eigenschaften. Oft genügt jedoch die Zähigkeit dieser Produkte nicht den ständig steigenden Anforderungen des Marktes.

Es bestand die Aufgabe, besonders in der Kalte hochschlagzähe Formmassen zu schaffen, die neben der guten Zähigkeit, gut bearbeitbar sind und darüber hinaus eine gute Einfärbbarkeit besitzen.

Diese Aufgabe wird gelöst durch eine Formmasse, die enthält, jeweils bezogen auf die Formmasse aus A, B und C,

A) 3 - 40 Gew.-% mindestens eines Pfropfmischpolymerisats A aus

$a_1$) 50 - 80 Gew.-%, bezogen auf A, eines Elastomeren (Kautschuks; $a_1$) auf Basis von Homopolybutadien oder Butadiencopolymerisaten als Pfropfgrundlage,

$a_2$) 20 - 50 Gew.-%, bezogen auf A. einer zweistufig aufgebauten Pfropfhülle ($a_2$) aus Styrol ($a_{21}$) und Acrylnitril oder Methylmethacrylat ($a_{23}$),

wobei A eine mittlere Teilchengröße von 0,2 - 1 $\mu$m ($d_{50}$-Wert der integralen Masseverteilung) besitzt;

B) 7 - 70 Gew.-% mindestens eines Pfropfmischpolymerisats B aus

$b_1$) 40 - 70 Gew.-%, bezogen auf B, eines Elastomeren ($b_1$) auf Basis von Homopolybutadien oder Butadiencopolymerisaten als Pfropfgrundlage,

$b_2$) 30 - 60 Gew.-%, bezogen auf B, einer Pfropfhülle ($b_2$), die einstufig aufgebaut ist und durch Pfropfen einer Mischung aus Styrol ($b_{21}$) und Acrylnitril ($b_{22}$) im Gewichtsverhältnis 90:10 bis 60:40 erhältlich ist,

wobei B eine mittlere Teilchengröße von 0,05 - 0,15 $\mu$m ($d_{50}$-Wert der integralen Masseverteilung) besitzt,

C) 20 - 90 Gew.-% eines Copolymerisats C aus Styrol($c_{21}$) und Acrylnitril, Methylmethacrylat oder N-Phenylmaleinimid($c_{22}$).

Erfindungsgemäß wird die Formmasse dadurch erhalten, daß die Herstellung der Pfropfhülle $a_2$ des Pfropfmischpolymerisates A in zwei Stufen erfolgt, wobei man

in der ersten Verfahrensstufe in Gegenwart der Pfropfgrundlage $a_1$,

5 - 50 Gew.-%, bezogen auf $a_2$, ausschließlich Styrol ($a_{21}$),

danach in einer zweiten Verfahrensstufe in Gegenwart des in der ersten Verfahrensstufe erhaltenen Produktes

50 - 95 Gew.-%, bezogen auf $a_2$, eines Gemisches aus Styrol ($a_{21}$) und Acrylnitril oder Methylmethacrylat ($a_{23}$) im Gewichtsverhältnis 90:10 bis 60:40 aufpfropft und A, B und C in an sich bekannter Weise mischt.

Die erfindungsgemäße Formmasse enthält oder vorzugsweise besteht aus

3 - 40 Gew.-%, vorzugsweise 5 - 30 Gew.-%, insbesondere 7 - 20 Gew.-% A;

7 - 70 Gew.-%, vorzugsweise 10 - 50 Gew.-%, insbesondere 15 - 35 Gew.-% B;

20 - 90 Gew.-%, vorzugsweise 30 - 80 Gew.-%, insbesondere 30 - 70 Gew.-% C.

Außerdem kann die Formmasse, bezogen auf 100 Gew.-Teile aus A + B + C, 1 bis 50 Gew.-Teile, vorzugsweise 5 bis 40 Gew.-Teile einer Komponente D (Zusatzstoffe) aufweisen.

Komponente A

Das Pfropfmischpolymerisat A besteht aus einem Elastomeren (Kautschuk) $a_1$, das 50 - 80 Gew.-%, insbesondere 55 - 75 Gew.-%, jeweils bezogen auf A, ausmacht, und einer auf das Elastomere gepfropften Hülle $a_2$ ($a_1 + a_2 = A$). Es weist eine mittlere Teilchengröße im Bereich von 0,2 bis 1 $\mu$m, vorzugsweise 0,2 bis 0,75 $\mu$m ($d_{50}$ Wert der integralen Masserverteilung) auf.

Das Elastomere $a_1$ ist aufgebaut aus Homopolybutadien oder Butadiencopolymerisaten mit bis zu 30 Gew.-% an Comonomeren wie Styrol oder Acrylnitril. Vorzugsweise wird ausschließlich Polybutadien als Pfropfgrundlage verwendet.

Die Pfropfhülle $a_2$ ist aus Styrol ($a_{21}$) und Acrylnitril oder Methylmethacrylat ($a_{23}$) aufgebaut.

Die Herstellung der Pfropfhülle $a_2$ des Pfropfmischpolymerisates A in zwei Stufen (vgl. oben) ist ein wesentliches Element der Erfindung; man polymerisiert in der ersten Verfahrensstufe in Gegenwart der Pfropfgrundlage $a_1$

5 - 50 Gew.-%, vorzugsweise 10 - 40 Gew.-%, bezogen auf $a_2$, ausschließlich Styrol ($a_{21}$) und

danach in der zweiten Verfahrensstufe in Gegenwart des in der ersten Verfahrensstufe erhaltenen Produktes 50 - 95 Gew.-%, vorzugsweise 60 - 90 Gew.-%, bezogen auf $a_2$, eines Gemisches aus Styrol ($a_{21}$) und Acrylnitril oder Methylmethacrylat ($a_{23}$) im Gewichtsverhältnis 90:10 bis 60:40, vorzugsweise 80:20 bis 65:35.

Herstellung des Elastomeren $a_1$

Das Elastomer, die Pfropfgrundlage, wird hergestellt, indem Butadien allein, gegebenenfalls zusammen mit den weiteren Comonomeren in wäßriger Emulsion in an und für sich bekannter Weise bei Temperaturen von 20 bis 100°C, vorzugsweise von 50 bis 80°C polymerisiert werden. Es können die üblichen Emulgatoren, wie Alkalisalze von Alkyl- oder Alkylarylsulfonsäuren, Alkylsulfate, Fettalkoholsulfonate, Salze höhere Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von bis 2 Gew.-%, bezogen auf die bei der Herstellung der Pfropfgrundlage eingesetzten Monomeren, einzusetzen. Im allgemeinen wird bei einem Wasser- zu Monomeren-Verhältnis von 2:1 bis 0,5:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage $a_1$ eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpgrophosphat verwendet werden; ferner werden 0,1 bis 3 Gew.-% eines Molekulargewichtsreglers - wie Mercaptane, Terpinole oder dimeres α-Methylstyrol - bei der Polymerisation verwendet.

Die Polymerisationsbedingungen wurden so gewählt, daß entweder bei der Polymerisation, durch ein hohes Monomer- zu Wasserverhältnis und einer abgestuften Seifenzugabe, ein Latex erhalten wurde, dessen $d_{50}$-Wert im Bereich von 0,2 μm lag oder aber ein Emulsionspolymerisat, mit mittleren Teilchengrößen im Bereich von 60 bis 150 nm in bekannter Weise agglomeriert wurde (vgl. DE-AS 24 27 960).

Herstellung der Pfropfhülle $a_2$

Die Pfropfhülle $a_2$ ist 2-stufig aufgebaut und wird durch sukzessive Polymerisation des Styrols ($a_{21}$) und Acrylnitril oder Methylmethacrylat ($a_{23}$) in zwei Verfahrensschritten in Gegenwart des Latex des Elastomeren $a_1$ erzeugt. Zu ihrer Herstellung wird zunächst in der ersten Verfahrensstufe ausschließlich Styrol ($a_{21}$) verwendet.

Es ist bekannt, wie man dieses Ziel erreicht (Vorlage der Monomeren, Zugabe während der Polymerisation und dgl.).

Es ist vorteilhaft, die Pfropfmischpolymerisation des Styrols (erste Stufe) auf auf das als Pfropfgrundlage dienende Elastomere $a_1$ in wäßriger Emulsion unter den üblichen, vorstehend aufgeführten Bedingungen durchzuführen. Dies kann zweckmäßig im gleichen System erfolgen wie die Emulsionspolymerisation zur Herstellung der Pfropfgrundlage $a_1$, wobei - falls notwendig - weiterer Emulgator und Initiator zugegeben werden kann. Das Styrol kann einen Vernetzer in Mengen von 0,1 - 1 Gew.-%, bezogen auf Styrol, enthalten. Bevorzugt wird Divinylbenzol als Vernetzer eingesetzt. Die Pfropfung kann absatzweise in einer oder mehreren Stufen oder vorzugsweise kontinuierlich erfolgen. Sie wird so geführt, daß ein Pfropfgrad von 1 bis 30, vorzugsweise von 5 bis 25, bezogen auf die erste Verfahrensstufe, im Pfropfmischpolymerisat resultiert.

Unter Pfropfgrad (PG) versteht man das Verhältnis der Pfropfmonomeren zum Pfropfkautschuk in Gewichtsteilen multipliziert mit dem Faktor 100

$$PG = \frac{Pfropfmonomeren}{Pfropfkautschuk} \cdot 100$$

wobei für die erste Pfropfstufe gilt:

$$\frac{a_{21}}{a_1 + a_{21}}$$

und für die zweite nachstehend beschriebene Pfropfstufe:

$$\frac{a_{21\,Rest} + a_{23}}{a_1 + a_{21} + (a_{21\,Rest} + a_{23})}$$

In der zweiten Stufe wird eine Pfropfmischpolymerisation mit Styrol $a_{21\,Rest}$ und Acrylnitril oder Methylmethacrylat ($a_{23}$) durchgeführt. Auch der zweite Schritt der Pfropfmischpolymerisation wird zweckmäßigerweise im gleichen System durchgeführt, dabei kann - falls notwendig - weiterer Emulgator und Initiator zugegeben werden.

Das aufzupfropfende Monomeren-Gemisch (bevorzugt wird ein Gewichtsverhältnis der Gesamtmenge an Styrol zu Acrylnitril von 90:10 bis 60:40) kann dem Reaktionsgemisch auf einmal, absatzweise in mehreren Stufen oder vorzugsweise kontinuierlich während der Polymerisation zugegeben werden. Die Pfropfmischpolymerisation des Gemisches von Styrol und Acrylnitril in Gegenwart des Reaktionsproduktes der 1. Pfropfstufe wird so ausgeführt, daß ein Pfropfgrad von 10-47,5 Gew.-%, vorzugsweise von 15 bis 35 Gew.-%, im Pfropfmischpolymerisat A resultiert. Die Pfropfmischpolymerisate sollen erfindungsgemäß eine mittlere Teilchengröße zwischen 0,2 und 1,0 $\mu$m ($d_{50}$-Wert) besitzen. Die Bedingungen der Pfropfmischpolymerisation sind so zu wählen, daß Teilchengrößen in diesem Bereich resultieren. Maßnahmen hierzu sind bekannt und z.B. in der DE-PS 12 60 135 und der DE-OS 28 26 925 sowie in Journal of Applied Polymer Science, Vol. 9 (1965), S. 2999 bis 2938 beschrieben.

Zusätzlich zu dem reinen Pfropfmischpolymerisat A enthält die Komponente A noch einen geringeren Anteil einer nicht-elastomeren Hartkomponente, die bei der Pfropfmischpolymerisation entsteht und aus freiem, nicht gepfropftem Copolymerisat bzw. Homopolymerisat der Pfropfmonomeren besteht. Diese Produkte werden im Sinne der vorliegenden Erfindung der Komponente A zugerechnet.

Komponente B

Die Komponente B stellt ein feinteiliges Pfropfmischpolymerisat dar, das eine mittlere Teilchengröße im Bereich von 0,05 bis 0,15 $\mu$m ($d_{50}$-Wert der integralen Masseverteilung) aufweist.

Es ist aufgebaut aus

40 - 70 Gew.-%, Vorzugsweise 45 bis 70 Gew.-%, insbesondere

45 - 60 Gew.-%, bezogen auf B, eines Elastomeren $b_1$ auf Basis von Homopolybutadien oder Butadiencopolymerisaten als Pfropfgrundlage und

60 - 30 Gew.-%, vorzugsweise 55 bis 30 Gew.-%, insbesondere

55 - 40 Gew.-%, bezogen auf B, einer Pfropfhülle $b_2$, die einstufig aufgebaut ist und durch Pfropfen einer Mischung von Styrol ($b_{21}$) und Acrylnitril ($b_{22}$) im Gewichtsverhältnis 90:10 bis 60:40 erhalten wird.

Herstellung der Pfropfgrundlage $b_1$

Die Pfropfgrundlage $b_1$ wird wie vorstehend unter $a_1$ bereits beschrieben erhalten; allerdings wird zur Erzielung feinteiliger Dispersionen ($d_{50}$ = 0,05 - 0,19 $\mu$m) eine höhere Emulgatorkonzentration, 0,5 Gew.-%, bezogen auf $b_1$ und ein Wasser-zu-Monomer-Verhältnis von 1:1 bis 1:0,25 gewählt.

Herstellung der Pfropfhülle $b_2$

Der feinteilige monodisperse Kautschuklatex wird anschließend mit einem Gemisch aus Styrol ($b_{21}$) und Acrylnitril ($b_{22}$) gepfropft. Das Verhältnis der einpolymerisierten Monomeren $b_{21}/b_{22}$ soll vorzugsweise 80 : 20 bis 50 : 50, insbesondere 75 : 25 bis 60 : 40 betragen. Es ist bekannt, wie man dieses Ziel erreicht (Vorlage der Monomeren, Zugabe während der Polymerisation und dgl.).

Es ist vorteilhaft, die Pfropfmischpolymerisation des Gemisches aus $b_{21}$ und $b_{22}$ auf das als Pfropfgrundlage dienende Elastomere $b_1$ in wäßriger Emulsion unter den für das Polymerisat A beschriebenen Bedingungen durchzuführen. Die Pfropfmischpolymerisation kann zweckmäßig im gleichen System erfolgen wie die Emulsionspolymerisation zur Herstellung der Pfropfgrundlage $b_1$, wobei - falls notwendig - weiterer Emulgator und Initiator zugegeben werden kann. Gegebenenfalls kann den Pfropfmonomeren bis zu 1 %, bezogen auf $b_{21}$, eines Reglers aus der Reihe der Mercaptane oder Terpene zugesetzt werden, bevorzugt setzt man t-Dodecylmercaptan oder Terpinolen zu. Da die Pfropfausbeute bei der Pfropfmischpolymerisation nicht 100%ig ist, muß eine etwas größere Menge des Monomeren-Gemisches aus Styrol und Acrylnitril bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats ist jedem Fachmann geläufig und kann beispielsweise durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfmischpolymerisation entstehen im allgemeinen auch freie, nicht gepfropfte Copolymerisate, die rechnerisch der Komponente C zugeschlagen werden.

Komponente C

Zusätzlich zu den beiden Pfropfmischpolymerisaten A und B enthalten die erfindungsgemäßen Mischungen als weitere Komponente C eine Hartkomponente aus einem oder mehreren Copolymerisaten.

Die Komponente C ist aus Styrol $C_{21}$ und Acrylnitril, Methylmethacrylat oder N-Phenylmaleinimid $C_{22}$ aufgebaut.

Bei dieser zusätzlichen, separat hergestellten Hartkomponente C kann es sich also z.B. um ein Styrol/Acrylnitril-Copolymerisat, ein Styrol/Methylmethacryl-Copolymerisat oder ein Styrol/Acrylnitril/Methylmethacrylat, oder ein Styrol-Acrylnitril-N-Phenylmaleinimid-Terpolymerisat handeln. Diese Copolymerisate können einzeln oder auch in Mischung miteinander verwendet werden.

Die zusätzliche, separat hergestellte Hartkomponente C kann nach den herkömmlichen Methoden erhalten werden. So kann die Copolymerisation von Styrol mit Acrylnitril in Masse, Lösung, Suspension oder wäßriger Emulsion durchgeführt werden. Die Hartkomponente C hat vorzugsweise eine Viskositätszahl von 40 bis 100, insbesondere von 50 bis 80.

Komponente D:

Die erfindungsgemäßen Mischungen aus den Komponenten A, B und C können als weitere Komponente D Zusatzstoffe enthalten, wie sie für derartige Polymerisate üblich sind. Als solche seien beispielsweise genannt: Glasfasern, Metallfasern, Füllstoffe, weitere verträgliche Kunststoffe, Antistatika, Farbstoffe, Antioxidantien, Flammschutzmittel und Schmiermittel. Die Zusatzstoffe werden in üblichen Mengen eingesetzt.

Herstellung der Formmasse

Die Formmasse wird erhalten, vorzugsweise durch Abmischen von A,B und C, gegebenenfalls mit D, in einem Arbeitsgang.

Das Abmischen der Komponenten A, B und C (und gegebenenfalls D) kann nach allen bekannten Methoden erfolgen. Wenn die Komponenten A und B z.B. durch Emulsions-Polymerisation hergestellt worden sind, ist es z.B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Abmischen der Komponente A + B und C durch gemeinsames Extrudieren, Kneten oder Verwalzen der Komponenten, wobei die Komponente A + B notwendigenfalls zuvor aus der bei der Polymerisation erhaltenen Lösung oder wäßrigen Dispersion isoliert worden ist. Die in wäßriger Dispersion erhaltenen Produkte der Pfropfmischpolymerisation (Komponente A + B) können auch nur teilweise entwässert werden und als feuchte Krümel mit der Hartkomponente C vermischt werden, wobei dann während des Vermischens die vollständige Trockung der Pfropfmischpolymerisate erfolgt. Man kann auch die Hartkomponentenschmelze C dirket mit einer Dispersion des Pfropfmischpolymerisats die einen Feststoffgehalt von 40-70 Gew.-% aufweist, bei Temperaturen über 180°C intensiv vermischen.

Die in der vorliegenden Anmeldung beschriebenen Parameter wurden wie folgt bestimmt:

1. Die mittlere Teilchengröße wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert.

2. Die Kerbschlagzähigkeit $a_K$ in [$kJ/m^2$] der an Proben der Produkte wurde nach DIN 53 453 an bei 250°C gespritzten Normkleinstäben bei 23°C und -40°C gemessen. Die Schlagzähigkeiten der Probenvergleichsversuche und der Beispiele sind in die Tabelle mit aufgenommen.

3. Der Plastechontest in [Nm] der Produkte wurde nach DIN 53 453 an bei 250°C gespritzten Rundscheiben mit den Abmessungen, Durchmesser x Dicke, 60 mm x 2 mm bei 23°C gemessen. Die Werte der Proben von Beispielen und von Vergleichsversuchen finden sich in der Tabelle 2.

4. Die Viskositätszahl der Komponente C wurde nach DIN 53 726 von einer Lösung, die 0,5 g Polymerisat in 100 $cm^3$ Dimethylformamid bei 25°C bestimmt.

5. Der Schmelzindex MFI wird nach DIN 53 735 bei einer Temperatur von 200°C und 21,6 kp Belastung bestimmt. Die Einheit ist g/10 min. Die Vorbereitung der Proben erfolgt gemäß der DIN-16 772.

Für die Herstellung erfindungsgemäßer Formmassen und von Formmassen für Vergleichsversuche wurden die nachfolgend beschriebenen Produkte verwendet.

Herstellung der Pfropfgrundlage $a_1$

Durch Polymerisation von 60 Teilen Butadien in Gegenwart von 0,5 Teilen t-Dodecylmercaptan, 0,5 Teilen Na-$C_{12}$-$C_{20}$-Fettsäuresalz als Emulgator, 0,2 Teilen Kaliumperoxidisulfat und 0,5 Teilen NaCl in 80 Teilen Wasser wird bei 65°C ein Polybutadienlatex erhalten, dessen mittlere Teilchengröße bei 0,1 $\mu$m liegt. Nach Beendigung der Polymerisation wird der Polymerisationsautoklav entspannt und danch solange evakuiert bis der Restbutadiengehalt auf unter 100 ppmd (parts per million dispersion) absinkt.

Agglomeration der Pfropfgrundlage $a_1$ zu $a_{11}$

141,7 Teile dieses Latex wurden mit 12 Teilen einer wäßrigen 10 gew.-%igen Essigsäureanhydridlösung, wie in der US-P 3 551 370 beschrieben, agglomeriert. Man erhält einen engverteilten Latex mit einer mittleren Teilchengrößenverteilung von 0,7 $\mu$m. Nach der Agglomeration wird dieser Latex durch Augabe von 1 Teil eines Na-$C_{12}$-$C_{18}$-Sulfonsäuresalzes stabilisert.

Agglomeration der Pfropfgrundlage $a_1$ zu $a_{12}$

141,7 Teile dieses Latex $a_1$ wurden mit 12 Teilen einer 10 %igen Dispersion eines Copolymeren aus 97 Teilen Ethylacrylat und 3 Teilen Acrylamid agglomerisiert, wobei ein Polybutadienlatex mit einer mittleren Teilchengröße von 0,7 $\mu$m erhalten wird. Der so erhaltene Latex wird durch Zusatz von 0,6 Teilen Na-$C_{12}$-$C_{18}$-Fettsäuresalz gegen Koagulation stabilisiert.

Herstellung der Pfropfgrundlage $a_2$

60 Teile Butadien werden in Gegenwart von 0,5 Teilen + Dodecylmercaptan, 0,3 Teilen disproport. Na-Abietat, 0,1 Teilen Kaliumpersulfat, 0,2 Teilen Kaliumhydrogencarbonat und 40 Teilen Wasser wie in der DE-P 1 252 902 beschrieben, polymerisiert.

Nach 80 % Umsatz wurde 1 Teil des disproport. Na-Abietats in 10 Teilen Wasser zugegeben. Man erhielt nach 95 % Umsatz einen Latex, dessen $d_{50}$-Wert bei 0,4 $\mu$m lag.

Herstellung der Pfropfpolymerisate $A_1$ bis $A_8$

Die Pfropfpolymerisate werden nach der allgemeinen Rezeptur hergestellt: (alle Angaben in Gew.-

Teilen)
Pfropfgrundlage (Festpolymerisat) 60
Entsalztes Wasser 50-70
Initiator (Kaliumpersulfat) 0,08-0,15
Regler ( + Dodecylmercaptan) 0 - 1
Vernetzer (Divinylbenzol) 0 - 0,5
Pfropfmonomer $a_{21}$ 2 - 20
Pfropfmonomergemisch $a_{22}$ 10 - 35
Polymerisationstemperatur 65 - 75°C

Apparatur: Rührkessel (V2A) mit Kühler und Meßvorlagen. Polymerisationsverfahren: Batch- oder Zulaufansatz mit Monomerzulauf oder Initiator-Zulauf.

Im einzelnen wurden die in der Tabelle 1 genannten Gew.-Teile an Pfropfgrundlagen und Pfropfmonomeren bzw. Gemische davon in den in der Tabelle 1 genannten Mengen und Gewichtsverhältnissen angewendet.

Herstellung der Pfropfgrundlage $b_1$

Durch Polymerisation von 60 Teilen Butadien in Gegenwart von 0,5 Teilen t-Dodecylmercaptan, 0,5 Teilen Na-Stearat als Emulgator, 0,15 Teilen Kaliumpersulfat und 0,3 Teilen Na-hydrogencarbonat in 80 Teilen Wasser wird bei 65°C ein Polybuitadienlatex erhalten, dessen mittlere Teilchengröße bei 0,1 $\mu$m liegt. Nach Beendigung der Polymerisation (95 % Umsatz) wird der Polymerisationsautoklav entspannt und danch solange evakuiert bis der Restbutadiengehalt auf unter 100 ppmd (parts per million dispersion) absinkt, um ein Nachvernetzen zu verhindern.

Herstellung der Pfropfpolymerisate $B_1$ bis $B_3$

Die Pfropfpolymerisate wurden nach der allgemeinen Rezeptur hergestellt: (Alle Angaben in Gew.-Teilen)
Pfropfgrundlage (Festpolymerisat) 60
Entsalztes Wasser 60-70
Initiator (Kaliumpersulfat) 0,08-0,1
Regler ( + Dodecylmercaptan) 0 - 1
Pfropfmonomergemisch $b_2$ 40 - 50
Polymerisationstemperatur 65 - 75°C
Appratur: Rührkessel (V2A) mit Kühler und Meßvorlagen. Polymerisationsverfahren: Batch oder Zulaufansatz mit Monomer-Initiator oder Reglerzulauf.

EP 0 261 396 B1

$\overset{\text{o}}{\underset{\shortmid}{}} a_{21}$

Tabelle 1: Pfropfpolymerisate $A_1$ bis $A_8$

| Produkt | Pfropfgrundlage | Teilchengr. $d_{50}$ | 1. Stufe Pfropfmonomere $a_{22}$ Styrol Teile | 2. Stufe Pfropfmonomere $(a_{22})_{Rest}+a_{23}$ Styrol/Acrylnitril Teile | Verhältnis $(a_{22})_{Rest}/a_{23}$ Styrol:Acrylnitril |
|---|---|---|---|---|---|
| $A_1$ | $a_{11}$ | 0,7 | 8 | 17 | 70:30 |
| $A_2$ | $a_{11}$ | 0,7 | 5 | 20 | 75:25 |
| $A_3$ | $a_{11}$ | 0,7 | 10 | 30 | 75:25 |
| $A_4$ | $a_{12}$ | 0,4 | 8 | 17 | 70:30 |
| $A_5$ | $a_{12}$ | 0,4 | 5 | 20 | 75:25 |
| $A_6$ | $a_2$ | 0,4 | 8 | 17 | 70:30 |
| $A_7$ | $a_2$ | 0,4 | 5 | 20 | 75:25 |
| $A_8$ | $a_2$ | 0,4 | – | 25 | 88:12 n.e. |

Pfropfpolymerisate $B_1$ bis $B_3$

| Produkt | Pfropfgrundlage | Pfropfmonomere $b_2$ Styrol/Acrylnitril Teile | Verhältnis Styrol:Acrylnitril |
|---|---|---|---|
| $B_1$ | $a_1$ | 40 | 70:30 |
| $B_2$ | $b_1$ | 40 | 70:30 |
| $B_3$ | $b_1$ | 50 | 70:30 |

n.e. (nicht erfindungsgemäß)

Komponente C

$C_1$  Als Hartmatrix wurde ein in Massepolymerisation hergestelltes Styrol/Acrylnitrilcopolymerisat mit einer Viskositätszahl von 80 cm³/g eingesetzt und das 35 Gew.-% Acrylnitril enthielt und unter

8

dem Namen Laran 378 P im Handel erhältlich ist.

C₂ Als Hartmatrix wurde ein in Massepolymerisation hergestelltes Styrol/Acrylnitrilcopolymerisat mit einer Viskositätszahl von 50 cm³/g eingesetzt und das 30 Gew.-% Acrylnitril enthielt.

C₃ Als Hartmatrix wurde ein in Massepolymerisation hergestelltes Styrol/Acrylnitril/N-Phenylmaleinimidcopolymerisat im Verhältnis 50:20:30 eingesetzt, welches eine Viskositätszahl von 60 cm³/g besaß.

Die Erfindung wird durch die nachfolgenden Beispiele näher erläutert. Die in den Beispielen genannten Teile und Prozente beziehen sich, sofern nicht anders angegeben, auf das Gewicht.

Beispiele 1-10 und Vergleichsversuch A bis E

Die in der Tabelle 2 genannten Pfropfdispersionen $A_n$ und $B_n$ wurden nach Zusatz von 1,0 Teilen (auf 100 Teile Festpolymerisat) eines phenolischen Antioxidants (2,6 Di-t-Butyl-p-kresol) über eine 25 %ige Öl in Wasser-Emulsion mit Magnesiumsulfat koaguliert. Nach dem Waschen wird das resultierende Pulver bei 70°C im Vakuumschrank getrocknet.

Das Pulver wird anschließend in den Verhältnissen, wie in Tabelle 2 vermerkt, mit den Komponenten $C_n$ im Doppelschneckenextruder bei 180°C vermischt.

Tabelle 2:

| Beispiele | Pfropfdispersion $A_n$ Teile | Pfropfdispersion $B_n$ Teile | Hartkomponente $C_n$ Teile | $a_k$ 23 | $a_k$ 23 - 40°C | Plastechon 23°C | MFI |
|---|---|---|---|---|---|---|---|
| 1 | 14,3 $A_1$ | 33 $B_1$ | 52,7 $C_1$ | 27 | 18 | 36 | 4,5 |
| 2 | 8,6 $A_1$ | 23,3 $B_2$ | 68,1 $C_1$ | 17 | 9 | 24 | 10 |
| 3 | 8,6 $A_2$ | 23,3 $B_1$ | 68,1 $C_2$ | 15 | 8 | 21 | 15 |
| 4 | 16,7 $A_3$ | 33,3 $B_1$ | 50,0 $C_2$ | 25 | 16 | 33 | 7,5 |
| 5 | 8,6 $A_4$ | 23,3 $B_2$ | 68,1 $C_1$ | 18 | 10 | 28 | 9 |
| 6 | 10,7 $A_5$ | 29,2 $B_2$ | 60,1 $C_1$ | 23 | 12 | 32 | 4 |
| 7 | 17,1 $A_6$ | 30 $B_2$ | 62,9 $C_2$ | 24 | 14 | 35 | 8 |
| 8 | 14,3 $A_7$ | 25 $B_1$ | 60,7 $C_1$ | 26 | 15 | 37 | 3,5 |
| 9 | 11,4 $A_7$ | 20 $B_1$ | 68,6 $C_1$ | 20 | 11 | 27 | 7 |
| 10 | 11,4 $A_7$ | 20 $B_1$ | 34,2 $C_1$ / 34,2 $C_3$ | 21 | 9 | 23 | 6 |
| Vergleichsversuche | | | | | | | |
| A | 14,3 $A_8$ | 33,3 $B_1$ | 52,4 $C_2$ | 14 | 7 | 15 | 5 |
| B | 10,7 $A_8$ | 29,2 $B_1$ | 60,1 $C_2$ | 20 | 10 | 20 | 6 |
| C | 8,6 $A_8$ | 28 $B_3$ | 63,4 $C_1$ | 19 | 11 | 22 | 3,5 |
| D | 28,6 $A_6$ | - | 71,4 $C_2$ | 17 | 8 | 25 | 4,5 |
| E | - | 33,3 $B_3$ | 66,7 $C_1$ | 9 | 5 | 13 | 7 |

**Patentansprüche**

1. Thermoplastische Formmassen, enthaltend, jeweils bezogen auf die Formmasse aus A, B und C,
   A: 3 - 40 Gew.-% mindestens eines Pfropfmischpolymerisats aus, bezogen auf A,

$a_1$: 50 - 80 Gew.-% eines Elastomeren $a_1$ auf Basis von Homopolybutadien oder Butadiencopolymerisaten als Pfropfgrundlage und

$a_2$: 20 - 50 Gew.-% einer zweistufig aufgebauten Pfropfhülle $a_2$ aus Styrol ($a_{21}$) und Acrylnitril oder Methylmethacrylat ($a_{23}$)

wobei A eine mittlere Teilchengröße von 0,2 - 1 $\mu$m ($d_{50}$-wert der integralen Masseverteilung) besitzt;

B: 7 - 70 Gew.-% mindestens eines Pfropfmischpolymerisats B aus, bezogen auf B,

$b_1$: 40 - 70 Gew.-% eines Elastomeren $b_1$ auf Basis von Homopolybutadien- oder von Butadiencoplymerisaten als Pfropfgrundlage und

$b_2$: 30 - 60 Gew.-% einer Pfropfhülle $b_2$, die einstufig aufgebaut ist und durch Pfropfen einer Mischung aus Styrol $b_{21}$ und Acrylnitril $b_{22}$ im Gewichtsverhältnis 90:10 bis 60:40 erhältlich ist,

wobei B eine mittlere Teilchengröße von 0,05 - 0,15 $\mu$m ($d_{50}$-Wert der integralen Masseverteilung) besitzt;

C: 20 - 90 Gew.-% eines Copolymerisats C aus Styrol $c_{21}$ und Acrylnitril, N-Phenylmaleinimid oder Methylmethacrylat $c_{22}$

wie sie erhalten wird, wenn man zur Herstellung von A in einer ersten Verfahrensstufe in Gegenwart der Pfropfgrundlage $a_1$ eine Pfropfhülle $a_2$ aus 5 - 50 Gew.-%, bezogen auf $a_2$, ausschließlich Styrol $a_{21}$ und danach in einer zweiten Verfahrensstufe in Gegenwart des in der ersten verfahrensstufe erhaltenen Produktes eine weitere Pfropfhülle aus 50 - 95 Gew.-%, bezogen auf $a_2$, eines Gemisches aus Styrol ($a_{21}$) und Acrylnitril oder Methylmethacrylat ($a_{23}$) im Gewichtsverhältnis von ($a_{21}$) zu $a_{23}$ 90 : 10 bis 60 : 40 aufpfropft und

A mit B und C in an sich bekannter Weise mischt.

2. Formmasse nach Anspruch 1, enthaltend

5 - 30 Gew.-% eines Pfropfmischpolymerisats A aus

55 - 75 Gew.-% des Elastomeren $a_1$ als Pfropfgrundlage und

25 - 45 Gew.-% der Pfropfhülle $a_2$,

10 - 50 Gew.-% eines Pfropfmischpolymerisats B aus

45 - 70 Gew.-% des Elastomeren $b_1$ als Pfropfgrundlage und

30 - 55 Gew.-% der Pfropfhülle $b_2$ sowie

30 - 80 Gew.-% des Copolymerisats C.

3. Thermoplastische Formmasse nach Anspruch 2, enthaltend

7 - 20 Gew.-% eines Pfropfmischpolymerisats A aus

55 - 75 Gew.-% des Elastomeren $a_1$ und

25 - 45 Gew.-% der Pfropfhülle $a_2$, die besteht aus,

bezogen auf $a_2$,

10 - 40 Gew.-% Styrol $a_{21}$ als erster Pfropfhülle und

60 - 90 Gew.-% eines Gemisches aus Styrol $a_{22}$ und Acrylnitril $a_{23}$ im Gewichtsverhältnis 80:20 bis 65:35 als zweiter Pfropfhülle,

15 - 35 Gew.-% des Pfropfmischpolymerisats B und

30 - 70 Gew.-% des Copolymerisats C.

4. Formmasse nach einem der Ansprüche 1 bis 3, enthaltend, bezogen auf 100 Gew.-Teile A, B und C, 1 bis 50 Gew.-Teile mindestens einen weiteren Bestandteil D.

5. Verwendung der Formmasse nach Anspruch 4 zur Herstellung von Formteilen.

**Claims**

1. A thermoplastic molding material containing, based in each case on the molding material comprising A, B and C,

A: 3-40% by weight of one or more graft copolymers of, based on A,

$a_1$: 50-80% by weight of an elastomer $a_1$ based on homopolybutadiene or butadiene copolymers, as the grafting base, and

$a_2$: 20-50% by weight of a graft $a_2$ synthesized in two stages from styrene ($a_{21}$) and acrylonitrile or methyl methacrylate ($a_{23}$),

A having a median particle size of 0.2-1 $\mu$m ($d_{50}$ value of the integral mass distribution),

B: 7-70% by weight of one or more graft copolymers B of, based on B,

$b_1$: 40-70% by weight of an elastomer $b_1$ based on homopolybutadiene or butadiene copolymers, as the grafting base, and

$b_2$: 30-60% by weight of a graft $b_2$ which is synthesized in one stage and is obtainable by grafting a mixture of styrene $b_{21}$ and acrylonitrile $b_{22}$ in a weight ratio of from 90 : 10 to 60 : 40,

B having a median particle size of 0.05-0.15 $\mu$m ($d_{50}$ value of the integral mass distribution), and

C: 20-90% by weight of a copolymer C of styrene $c_{21}$ and acrylonitrile, N-phenylmaleimide or methyl methacrylate $c_{22}$,

as obtained if, for the preparation of A, a graft $a_2$ of from 5 to 50% by weight, based on $a_2$, of exclusively styrene $a_{21}$ is grafted on in a first process stage in the presence of the grafting base $a_1$, and thereafter a further graft of 50-95% by weight, based on $a_2$, of a mixture of styrene ($a_{21}$) and acrylonitrile or methyl methacrylate ($a_{23}$) in a weight ratio of $a_{21}$ to $a_{23}$ of from 90 : 10 to 60 : 40 is grafted on in a second process stage in the presence of the product obtained in the first process stage, and

A is mixed with B and C in a conventional manner.

2. A molding material as claimed in claim 1, containing

5-30% by weight of a graft copolymer A of

55-75% by weight of the elastomer $a_1$, as the grafting base, and

25-45% by weight of the graft $a_2$,

10-50% by weight of a graft copolymer B of

45-70% by weight of elastomer $b_1$, as the grafting base, and

30-55% by weight of the graft $b_2$ and

30-80% by weight of the copolymer C.

3. A thermoplastic molding material as claimed in claim 2, containing

7-20% by weight of a graft copolymer A of

55-75% by weight of the elastomer $a_1$ and

25-45% by weight of the graft $a_2$, which consists of, based on $a_2$,

10-40% by weight of styrene $a_{21}$, as the first graft, and

60-90% by weight of a mixture of styrene $a_{22}$ and acrylonitrile $a_{23}$ in a weight ratio of 80 : 20 to 65 : 35, as the second graft,

15-35% by weight of the graft copolymer B and

30-70% by weight of the copolymer C.

4. A molding material as claimed in any of claims 1 to 3, containing from 1 to 50 parts by weight of one or more further components D per 100 parts by weight of A, B and C.

5. Use of a molding material as claimed in claim 4 for the production of moldings.

**Revendications**

1. Masses à mouler thermoplastiques, contenant, chaque fois par rapport à la masse à mouler composée de A, B et C,

A: 3 - 40% en poids d'au moins un copolymère greffé composé, par rapport à A, de

$a_1$: 50 - 80% en poids d'un élastomère a, à base d'homopolybutadiène ou de copolymères de butadiène en tant que base de greffage, et

$a_2$: 20 - 50% en poids d'une enveloppe de greffage $a_2$ formée en deux étapes à partir de styrène ($a_{21}$) et d'acrylonitrile au de méthacrylate de méthyle ($a_{23}$),

A ayant une grosseur moyenne de particules de 0,2 - 1 $\mu$m (valeur $d_{50}$ de la distribution de masse intégrale);

B: 7 - 70% en poids d'au moins un copolymère greffé B composé, par rapport à B, de

$b_1$: 40 - 70% en poids d'un élastomère $b_1$ à base d'homopolybutadiène ou de copolymères de butadiène en tant que base de greffage, et

$b_2$: 30 - 60% en poids d'une enveloppe de greffage $b_2$ qui est formée en une seule étape et est obtenue par greffage d'un mélange de styrène ($b_{21}$) et d'acrylonitrile ($b_{22}$) dans un rapport en

12

poids de 90:10 à 60:40.

B avant une grosseur moyenne de particules de 0,05 - 0,15 $\mu$m (valeur $d_{50}$ de la distribution de masse intégrale);

C: 20 - 90% en poids d'un copolymère C de styrène ($c_{21}$) et d'acrylonitrile, de N-phénylmaléimide ou de méthacrylate de méthyle ($c_{22}$),

telles qu'elles sont obtenues lorsque, pour la préparation de A, on greffe, dans une première étape opératoire en présence du support de greffage $a_1$, une enveloppe de greffage $a_2$ à partir de 5 - 50% en poids, par rapport à $a_2$, de styrène $a_{21}$ exclusivement, puis, dans une seconde étape opératoire en présence du produit obtenu dans la première étape opératoire, une autre enveloppe de greffage à partir de 50 - 95% en poids, par rapport à $a_2$, d'un mélange de styrène ($a_{21}$) et d'acrylonitrile ou de méthacrylate de méthyle ($a_{23}$) dans un rapport en poids de $a_{21}$ à $a_{23}$ de 90 : 10 à 60 : 40, et on mélange A à B et C de façon en soi connue.

2. Masse à mouler selon la revendication 1, contenant

5 - 30% en poids d'un copolymère greffé A composé de

55 - 75% en poids de l'élastomère $a_1$ en tant que base de greffage et

25 - 45% en poids de l'enveloppe de greffage $a_2$,

10 - 50% en poids d'un copolymère greffé B composé de

45 - 70% en poids de l'élastomère $b_1$ en tant que base de greffage et

30 - 55% en poids de l'enveloppe de greffage $b_2$, et

30 - 80% en poids du copolymère C.

3. Masse à mouler thermoplastique selon la revendication 2, contenant

7 - 20% en poids d'un copolymère greffé A composé de

55 - 75% en poids de l'élastomère $a_1$ et

25 - 45% en poids de l'enveloppe de greffage $a_2$ qui se compose, par rapport à $a_2$, de

10 - 40% en poids de styrène $a_{21}$ en tant que première enveloppe de greffage et

60 - 90% en poids d'un mélange de styrène $a_{22}$ et d'acrylonitrile $a_{23}$ dans un rapport en poids de 80:20 à 65:35 en tant que seconde enveloppe de greffage,

15 - 35% en poids du copolymère greffé B et

30 - 70% en poids du copolymère C.

4. Masse à mouler selon l'une quelconque des revendications 1 à 3, contenant, pour 100 parties en poids de A, B et C, 1 à 50 parties en poids d'au moins un autre composant D.

5. Utilisation de la masse à mouler selon la revendication 4 pour la fabrication de pièces moulées.